# EUROPEAN PATENT SPECIFICATION

(11) **EP 4 086 167 B1**
(45) Date of publication and mention of the grant of the patent: **24.12.2025**
(21) Application number: 21206416.6
(22) Date of filing: 04.11.2021
(51) Int. Cl.: B64C 21/01, B64C 1/16, F02K 5/00, F02K 1/52, B64D 27/33, B64D 27/35, B64D 31/18

(54) **AIRCRAFT HAVING DISTRIBUTED FANS FOR BOUNDARY LAYER INGESTION**
FLUGZEUG MIT VERTEILTEN LÜFTERN ZUR GRENZSCHICHTZUFUHR
AÉRONEF AVEC DES VENTILATEURS DISTRIBUÉS POUR UNE INGESTION DE LA COUCHE LIMITE

(30) Priority: 04.05.2021 IN 202111020362; 19.10.2021 US 202117504618
(43) Date of publication of application: 09.11.2022
(73) Proprietor: General Electric Company, Evendale, OH 45215 (US)
(72) Inventor: GOTTAPU, Dhananjaya Rao, 560066 Bangalore (IN); MURROW, Kurt David, Cincinnati, 45215 (US); JOSHI, Narendra Digamber, Niskayuna, 12309 (US)
(74) Representative: Openshaw & Co.

(56) References cited:
- EP-A1- 3 943 733
- EP-A2- 2 730 501
- WO-A1-2019/243117
- WO-A1-2019/243119
- US-A1- 2017 121 031
- US-A1- 2017 361 939

## Description

### PRIORITY INFORMATION

The present application claims priority to Indian Patent Application Number 202111020362 filed on May 4, 2021.

### FIELD

The present subject matter relates generally to aircraft propulsion systems, and more particularly to aircraft propulsion systems equipped with boundary layer ingestion features.

### BACKGROUND

A conventional commercial aircraft generally includes a fuselage, a pair of wings, and a propulsion system that provides thrust. The propulsion system typically includes at least two aircraft engines, such as turbofan jet engines. Each turbofan jet engine is mounted to a respective one of the wings of the aircraft, such as in a suspended position beneath the wing. Such a configuration allows for the turbofan jet engines to interact with separate, freestream airflows that are not impacted by the wings and/or fuselage. This configuration can reduce an amount of turbulence within the air entering an inlet of each respective turbofan jet engine, which has a positive effect on a net propulsive thrust of the aircraft.

However, drag on the aircraft also has an effect on the net propulsive thrust of the aircraft. A total amount of drag on the aircraft, including skin friction, form, and induced drag, is generally proportional to a difference between a freestream velocity of air approaching the aircraft and an average velocity of a wake downstream from the aircraft that is produced due to the drag on the aircraft.

As such, systems have been proposed to counter the effects of drag on the aircraft. For example, certain propulsion systems incorporate boundary layer ingestion systems. For instance, some propulsion systems include an electrically-driven fan on the aircraft empennage to derive propulsive benefit by ingesting fuselage boundary layer airflow. Such boundary layer ingestion fans can reduce the drag on the aircraft, thereby improving the propulsive efficiency of the propulsion system. Further improvements to aircraft propulsion systems incorporating boundary layer ingestion systems would be welcome in the art.

WO2019/243117 discloses a rear propulsion system intended to be mounted on a rear tip of an aircraft in order to ingest a boundary layer of the aircraft.

### BRIEF DESCRIPTION

Aspects and advantages of the invention will be set forth in part in the following description, or may be obvious from the description, or may be learned through practice of the invention.

In one aspect, an aircraft according to claim 1 is provided. The aircraft includes a fuselage extending between a forward end and an aft end. The aircraft has a fan array including fans being mounted to and arranged circumferentially around the aft end of the fuselage. The fans are positioned so as to ingest boundary layer airflow flowing along the fuselage. At least two fans of the fans are of different size. In another aspect, a method according to claim 13 is provided.

These and other features, aspects and advantages of the present subject matter will become better understood with reference to the following description and appended claims. The accompanying drawings, which are incorporated in and constitute a part of this specification, illustrate embodiments of the subject matter and, together with the description, explain the principles of the subject matter.

### BRIEF DESCRIPTION OF THE DRAWINGS

A full and enabling disclosure of the present subject matter, including the best mode thereof, directed to one of ordinary skill in the art, is set forth in the specification, which makes reference to the appended figures, in which:
FIG. 1 provides a schematic top view of an aircraft according to various exemplary embodiments of the present disclosure;
FIG. 2 provides a side elevation view of the aircraft of FIG. 1;
FIG. 3 provides a schematic aft-looking-forward view of the aircraft of FIG. 1;
FIG. 4 provides a schematic cross-sectional view of one of the propulsors of the aircraft of FIG. 1;
FIG. 5 provides a schematic aft-looking-forward view of another aircraft according to one example embodiment of the present disclosure;
FIG. 6 provides a flow diagram of one example control scheme for operating the propulsion system of the aircraft of FIG. 1 according to one example embodiment of the present disclosure;
FIG. 7 provides a flow diagram of an exemplary method of operating an aircraft in accordance with exemplary embodiments of the present disclosure; and
FIG. 8 provides an example computing system according to example embodiments of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. However, the terms "upstream" and "downstream" as used herein may also refer to a flow of electricity.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a ten percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present disclosure is directed to an aircraft having distributed fans for boundary layer ingestion. In one example embodiment, an aircraft includes a fuselage extending between a forward end and an aft end. The aircraft includes a fan array including a plurality of boundary layer ingestion fans. Each fan of the fan array is mounted to and arranged circumferentially around the aft end of the fuselage. The fans are positioned so as to ingest boundary layer airflow flowing along the fuselage, e.g., during flight of the aircraft. In other embodiments, the array of boundary layer ingestion fans can be located at any location along the longitudinal length of the aircraft.

The fans of the array can be of varying size. At least two fans of the array are of different sizes. In some embodiments, the fan array can include three different sizes of fans. The different sizes of the fans may allow for the fans to be strategically positioned to ingest boundary layer airflow whilst minimizing the overall profile of the array. Larger fans can be positioned along the circumference of the fuselage where more suction of boundary layer airflow is needed while smaller fans can be positioned along the circumference of the fuselage where less suction of boundary layer airflow is needed, for example. Moreover, smaller fans can be used in tighter physical spaces.

Notably, each fan of the fan array is operatively coupled with an electric machine. The electric machines are operable to drive their respective fans to produce thrust. The fans of the array are independently controlled in accordance with the boundary layer suction requirements of the aircraft. For instance, one or more processors of a computing system of the aircraft can control the electrical power provided to each electric machine so that thrust outputs of the fans can be controlled to respective thrust outputs, which can be the same or different depending on the boundary layer suction requirements and the demanded thrust of the aircraft.

The above-noted features allow for enhanced boundary layer ingestion propulsion system capability to handle wake profiles associated with circular fuselage cross-sectional shapes as well as wake profiles associated with non-circular fuselage cross-sectional shapes. Moreover, as the fans can be operated by independent electric machines, the fans can be controlled independently as per the need of boundary layer ingestion suction requirements. This provides flexibility in reducing the drag on the aircraft whilst still meeting the thrust demands of the aircraft. Furthermore, by having relatively small fans within the array, when a fan blade issue or other fan malfunction arises, the handling and/or servicing of the fan is made easier, e.g., compared to where a relatively large single fan is incorporated as the boundary layer ingestion fan. The fans can be ducted with individual fan casings and can also be circumferentially encased with an outer nacelle. Partition walls can extend between the fuselage and the outer nacelle and can separate adjacent fans of the array. In this regard, fan tip losses can be minimized. Moreover, the partition walls may provide mounting structures for one or more of the fans, among other benefits.

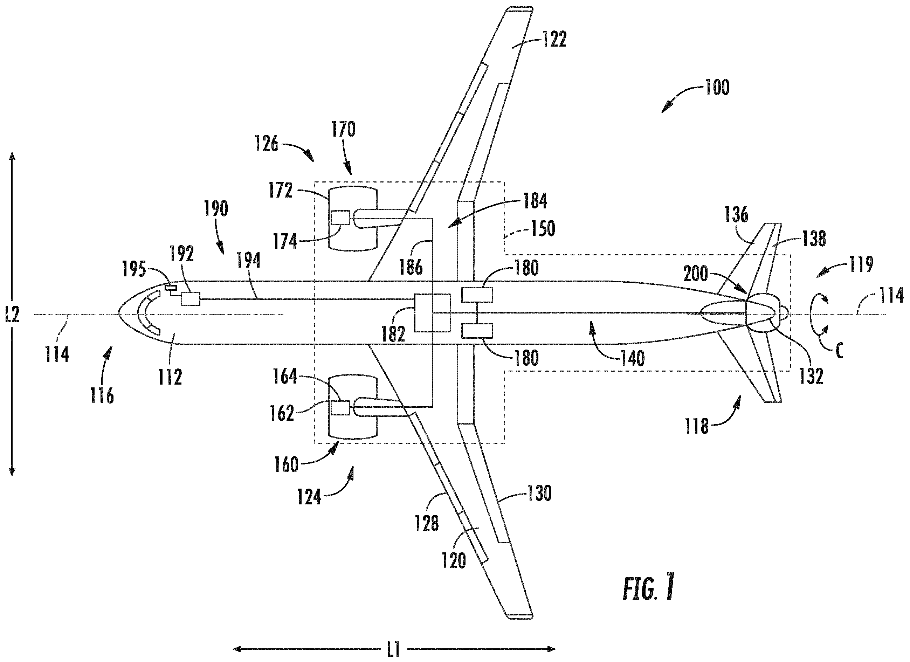

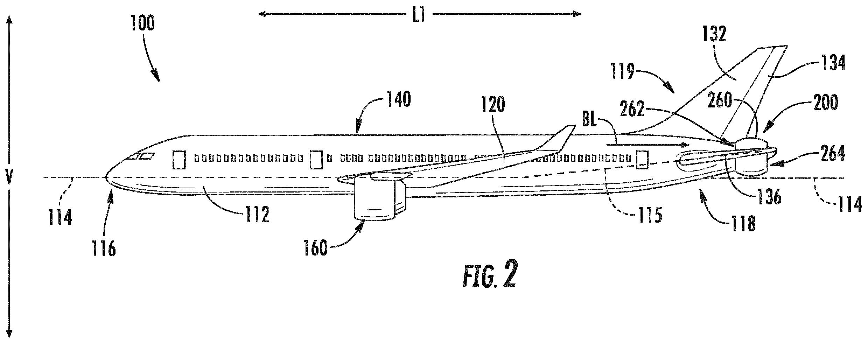

With reference now to FIGS. 1 and 2, FIG. 1 provides a schematic top view of an exemplary aircraft 100 as may incorporate various embodiments of the present disclosure. FIG. 2 provides a side elevation view of the aircraft 100. For reference, the aircraft 100 defines a longitudinal direction L1 and a lateral direction L2. The lateral direction L2 is perpendicular to the longitudinal direction L1. The aircraft 100 also defines a longitudinal centerline 114 that extends therethrough along the longitudinal direction L1. The aircraft 100 also defines a circumferential direction C. Various components of the aircraft 100 may also be defined herein with respect to a vertical direction V shown in FIG. 2. The position or orientation a component with respect to the vertical direction V is taken as its position or orientation as determined when the aircraft 100 is horizontally oriented in its upright position as shown in FIG. 2. Moreover, as best shown in FIG. 2, the aircraft 100 defines a mean line 115 extending between the forward end 116 and aft end 118 of the aircraft 100. As used herein, the "mean line" refers to a midpoint line extending along a length of the aircraft 100, not taking into account the appendages of the aircraft 100 (such as the wings and stabilizers discussed below). In this regard, the mean line 115 is defined as the midpoint between the top and bottom of the fuselage 112 as determined when the aircraft 100 is in a horizontal orientation, e.g., as shown in FIG. 2.

As shown, the aircraft 100 extends between a forward end 116 and an aft end 118, e.g., along the longitudinal direction L1. Moreover, the aircraft 100 includes a fuselage 112 that extends longitudinally from the forward end 116 of the aircraft 100 to the aft end 118 of the aircraft 100. The aircraft 100 also includes an empennage 119 at the tail or aft end 118 of the aircraft 100. In addition, the aircraft 100 includes a pair of wings including a first, port side wing 120 and a second, starboard side wing 122. The first and second wings 120, 122 each extend laterally outward from the fuselage 112 with respect to the longitudinal centerline 114. The first wing 120 and a portion of the fuselage 112 together define a first side 124 of the aircraft 100 and the second wing 122 and another portion of the fuselage 112 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100. The longitudinal centerline 114 generally splits the aircraft 100 into first side 124 and the second side 126.

The aircraft 100 includes various control surfaces. For this embodiment, each wing 120, 122 includes one or more leading edge flaps 128 and one or more trailing edge flaps 130. The aircraft 100 further includes, or more specifically, the empennage 119 of the aircraft 100 includes, a vertical stabilizer 132 having a rudder flap 134 for yaw control and a pair of horizontal stabilizers 136 each having an elevator flap 138 for pitch control. The fuselage 112 additionally includes an outer surface or skin 140. It should be appreciated that in other exemplary embodiments of the present disclosure, the aircraft 100 may additionally or alternatively include any other suitable configuration. For example, in other embodiments, the aircraft 100 may include any other control surface configuration or empennage arrangement.

The exemplary aircraft 100 of FIGS. 1 and 2 also includes a propulsion system 150. For this embodiment, the propulsion system 150 is a hybrid-electric propulsion system. However, in other embodiments, the propulsion system 150 can be another suitable type of propulsion system, such as a fully-electric propulsion system.

As shown, the propulsion system 150 includes a first primary propulsor 160 and a second primary propulsor 170 both operable to produce thrust. The first primary propulsor 160 is mounted in an under-wing configuration to the first wing 120 and the second primary propulsor 170 is mounted in an under-wing configuration to the second wing 122. In other example embodiments, one or both of the first and second primary propulsors 160, 170 may be mounted to the aircraft 100 in other suitable locations and/or configurations.

The first primary propulsor 160 includes a gas turbine engine 162 and an electric machine 164 operatively coupled with the gas turbine engine 162. The electric machine 164 can be an electric generator, an electric motor, or a combination generator/motor. For this example embodiment, the electric machine 164 is a combination generator/motor. In this manner, when operating as an electric generator, the electric machine 164 can generate electrical power when driven by the gas turbine engine 162. When operating as an electric motor, the electric machine 164 can drive or motor the gas turbine engine 162. Moreover, for this example embodiment, the gas turbine engine 162 is configured as a turbofan, and thus, the first primary propulsor 160 is configured as a hybrid-electric turbofan.

Likewise, the second primary propulsor 170 includes a gas turbine engine 172 and an electric machine 174 operatively coupled with the gas turbine engine 172. The electric machine 174 can be an electric generator, an electric motor, or a combination generator/motor. For this example embodiment, the electric machine 174 is a combination generator/motor. In this manner, when operating as an electric generator, the electric machine 174 can generate electrical power when driven by the gas turbine engine 172. When operating as an electric motor, the electric machine 174 can drive or motor the gas turbine engine 172. Furthermore, for this example embodiment, the gas turbine engine 172 is configured as a turbofan, and thus, the second primary propulsor 170 is configured as a hybrid-electric turbofan.

The propulsion system 150 also includes a boundary layer ingestion system 200. Particularly, as will be explained in further detail herein, the boundary layer ingestion system 200 includes a plurality of propulsors each having a fan configured to ingest and consume air forming a boundary layer over the fuselage 112 of the aircraft 100. The fans ingest the relatively slow moving boundary layer airflow, represented schematically in FIG. 2 as the arrow BL, and accelerate the air to produce thrust for propelling the aircraft 100. As the fans ingest the boundary layer airflow, the drag on the aircraft 100 is reduced, which increases the efficiency of the propulsion system 150. Consequently, less thrust is needed to achieve a particular airspeed and less fuel is needed for the gas turbine engines 162, 172 of the first and second primary propulsors 160, 170, among other benefits.

The propulsion system 150 further includes one or more electric energy storage units 180 electrically connectable to the electric machines 164, 174 as well as other electrical loads, such as electric machines operatively coupled with fans of the boundary layer ingestion system 200. The electric energy storage units 180 may be configured as one or more batteries, such as one or more lithium-ion batteries, or alternatively may be configured as any other suitable electrical energy storage devices, such as supercapacitors. For the propulsion system 150 described herein, the one or more electric energy storage units 180 are configured to store a relatively large amount of electrical power. For example, in certain exemplary embodiments, the electric energy storage units 180 may be configured to store at least about fifty kilowatt hours of electrical power, such as at least about sixty-five kilowatt hours of electrical power, such as at least about seventy-five kilowatts hours of electrical power, and up to about one thousand kilowatt hours of electrical power.

The propulsion system 150 also includes a power management system having a controller 182 and a power bus 184. The electric machines 164, 174, the electric energy storage units 180, the electric machines associated with the fans of the boundary layer ingestion system 200, and the controller 182 are each electrically connectable to one another through one or more electric lines 186 of the power bus 184. For instance, the power bus 184 may include various switches or other power electronics movable to selectively electrically connect the various components of the propulsion system 150. Additionally, the power bus 184 may further include power electronics, such as inverters, converters, rectifiers, etc., for conditioning or converting electrical power within the propulsion system 150.

The controller 182 is configured to control the distribution of electrical power between the various components of the propulsion system 150. For example, the controller 182 may control the power electronics of the power bus 184 to provide electrical power to, or draw electrical power from, various components. For instance, the controller 182 may control the power electronics of the power bus 184 to draw and/or distribute electrical power from the one or more electric energy storage units 180 and/or the electric machines 164, 174 and provide the electrical power to the electric machines associated with the fans of the boundary layer ingestion system 200. Such is depicted schematically as the electric lines 186 of the power bus 184 extend through the controller 182.

The controller 182 can form a part of a computing system 190 of the aircraft 100. The computing system 190 of the aircraft 100 can include one or more processors and one or more memory devices embodied in one or more computing devices. For instance, as depicted in FIG. 1, the computing system 190 includes controller 182 as well as other computing devices, such as computing device 192. The computing system 190 can include other computing devices as well, such as engine controllers (not shown). The computing devices of the computing system 190 can be communicatively coupled with one another via a communication network. For instance, computing device 192 is located in the cockpit of the aircraft 100 and is communicatively coupled with the controller 182 of the propulsion system 150 via a communication link 194 of the communication network. The communication link 194 can include one or more wired or wireless communication links.

For this embodiment, the computing device 192 is configured to receive and process inputs, e.g., from a pilot or other crew members, and/or other information. In this manner, as one example, the one or more processors of the computing device 192 can receive an input indicating a demand to change a thrust output produced by the propulsors of the aircraft 100, and can cause, in response to the input, the controller 182 to control the electrical power to the electric motors associated with the fans of the boundary layer ingestion system 200, for example.

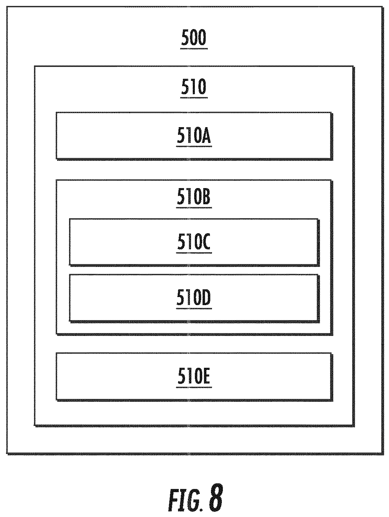

The controller 182 and other computing devices of the computing system 190 of the aircraft 100 may be configured in substantially the same manner as the exemplary computing devices of the computing system 500 described below with reference to FIG. 8 (and may be configured to perform one or more of the functions of the exemplary method (400) described below).

The aircraft 100 can also include a plurality of sensors for sensing various operating conditions associated with the aircraft 100. The plurality of sensors are represented schematically in FIG. 1 by sensor 195. The sensors can be communicatively coupled with one or more of the computing devices of the computing system 190. For instance, the aircraft 100 can include one or more airspeed sensors, temperature sensors, pressure sensors, altitude sensors, weight sensors, sensors for recording ambient conditions, and the like. Sensor data can be provided to the one or more processors of the computing system 190.

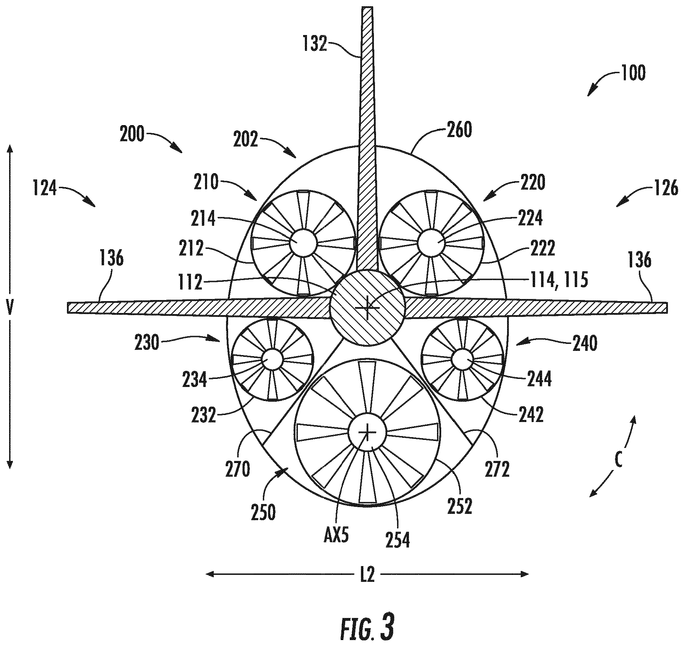

With reference to FIG. 3 in addition to FIGS. 1 and 2, FIG. 3 provides a schematic aft-looking-forward view of the aircraft 100 and depicts a plurality of propulsors of the boundary layer ingestion system 200. Particularly, for this embodiment, the boundary layer ingestion system 200 includes a first propulsor 210, a second propulsor 220, a third propulsor 230, a fourth propulsor 240, and a fifth propulsor 250. Each propulsor 210, 220, 230, 240, 250 has a fan rotatable about an axis of rotation. Moreover, for this embodiment, each propulsor 210, 220, 230, 240, 250 has an associated electric machine. Specifically, the first propulsor 210 has a fan 212 and an electric machine 214 operatively coupled thereto. Likewise, the second propulsor 220 has a fan 222 and an electric machine 224 operatively coupled thereto, the third propulsor 230 has a fan 232 and an electric machine 234 operatively coupled thereto, the fourth propulsor 240 has a fan 242 and an electric machine 244 operatively coupled thereto, and the fifth propulsor 250 has a fan 252 and an electric machine 254 operatively coupled thereto.

The electric machines 214, 224, 234, 244, 254 can each be electric motors, or a combination generator/motor. For this example embodiment, the electric machines 214, 224, 234, 244, 254 are each combination generator/motors. Thus, when operating in a drive or motor mode, the electric machines 214, 224, 234, 244, 254 can drive their respective fans 212, 222, 232, 242, 252 so that the fan blades of the fans 212, 222, 232, 242, 252 rotate about their respective axes of rotation. In this regard, the plurality of fans 212, 222, 232, 242, 252 can be electrically-driven fans. When operating in a generator mode, the electric machines 214, 224, 234, 244, 254 can generate electrical power when driven by their respective fans 212, 222, 232, 242, 252, e.g., during approach and landing. In some instances during flight, one or more of the electric machines 214, 224, 234, 244, 254 may be operated in a drive or motor mode to drive their respective fans 212, 222, 232, 242, 252 and one or more of the electric machines 214, 224, 234, 244, 254 may be operated in a generator mode to generate electrical power. In other instances, all electric machines 214, 224, 234, 244, 254 may be operated in a drive or motor mode to drive their respective fans 212, 222, 232, 242, 252. In yet other instances, all electric machines 214, 224, 234, 244, 254 may be operated in a generator mode to drive their respective fans 212, 222, 232, 242, 252. The generated electrical power can be stored in the electric energy storage units 180, provided to one or both of the electric machines 164, 174, or can be provided to some other aircraft system or load, for example.

For this embodiment, the fans 212, 222, 232, 242, 252 are mounted to the aft end 118 of the fuselage 112 and collectively form a distributed fan array 202. As shown, the fans 212, 222, 232, 242, 252 are arranged circumferentially around the fuselage 112 and are positioned so that they ingest boundary layer airflow flowing along the fuselage 112. As shown best in FIG. 3, for this embodiment, the fans 212, 222, 232, 242, 252 are arranged around, as practically as possible given the empennage configuration, the entire circumference of the fuselage 112, which has a circular cross-sectional shape in this example embodiment. In this regard, the fans 212, 222, 232, 242, 252 of the fan array 202 are arranged around the fuselage 112 so as to capture at least ninety percent (90%) of the boundary layer airflow flowing along the fuselage 112. In other embodiments, however, the fans of the fan array 202 need not be arranged around the entire circumference of the fuselage 112. For instance, in some embodiments, the fans of the fan array 202 are arranged around half the circumference of the fuselage 112. Moreover, in some embodiments, at least a portion of at least one of the fans 212, 222, 232, 242, 252 extends aft of a trailing edge of the vertical stabilizer 132 of the aircraft 100. In yet other embodiments, at least a portion of each fan 212, 222, 232, 242, 252 extends aft of a trailing edge of the vertical stabilizer 132 of the aircraft 100.

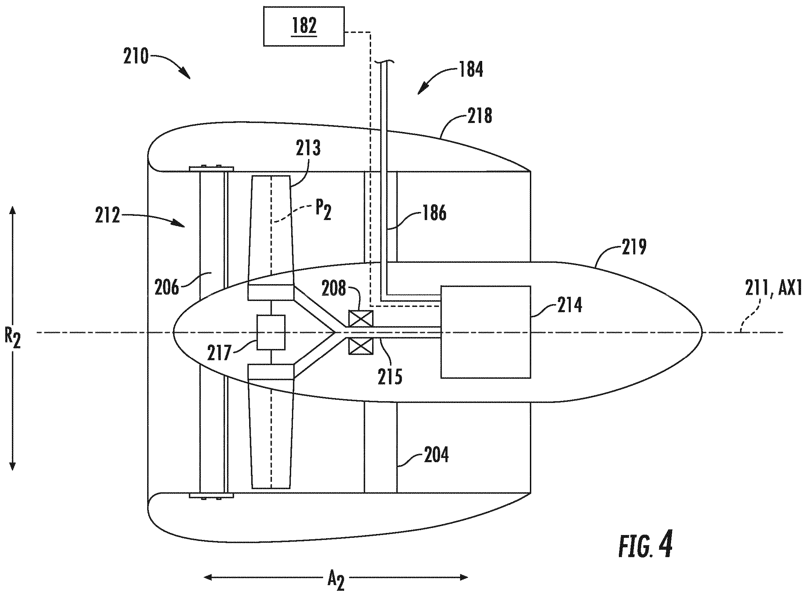

FIG. 4 provides a schematic cross-sectional view of the first propulsor 210 of the aircraft 100. Although the first propulsor 210 is shown and described with reference to FIG. 4, it will be appreciated that the other propulsors 220, 230, 240, 250 of the boundary layer ingestion system 200 can be configured in the same or similar manner. Thus, for the sake of brevity, only the first propulsor 210 will be described in detail.

As shown in FIG. 4, the first propulsor 210 includes fan 212 and electric machine 214. The first propulsor 210 defines an axial direction A2 extending along a longitudinal centerline axis 211 that extends therethrough for reference, which is coaxial with an axis of rotation AX1 of the fan 212 in this example embodiment. Further, the first propulsor 210 defines a radial direction R2. For the embodiment depicted, the fan 212 is rotatable about the axis of rotation AX1 by the electric machine 214.

The fan 212 includes a plurality of fan blades 213 and a fan shaft 215. The plurality of fan blades 213 are attached to/rotatable with the fan shaft 215 and spaced generally along a circumferential direction of the first propulsor 210 (not shown). In certain exemplary embodiments, the plurality of fan blades 213 may be attached in a fixed manner to the fan shaft 215, or alternatively, the plurality of fan blades 213 may be rotatable relative to the fan shaft 215, such as in the embodiment depicted. For example, the plurality of fan blades 213 each define a respective pitch axis P2, and for the embodiment depicted are attached to the fan shaft 215 such that a pitch of each of the plurality of fan blades 213 may be changed, e.g., in unison, by a pitch change mechanism 217. Changing the pitch of the plurality of fan blades 213 may increase an efficiency of the first propulsor 210 and/or may allow the first propulsor 210 to achieve a desired thrust profile. With such an exemplary embodiment, the fan 212 may be referred to as a variable pitch fan. In other example embodiments, the fan blades 213 may be fixed and thus may not be pitched.

Moreover, for the embodiment depicted, the first propulsor 210 includes a fan casing 218 attached to a core 219 of the first propulsor 210 through one or more struts or outlet guide vanes 204. The outlet guide vanes 204 are positioned downstream of the fan blades 213. In addition, the first propulsor 210 can include inlet guide vanes 206. The inlet guide vanes 206 are positioned upstream of the fan blades 213. The inlet guide vanes 206 may be shaped and/or oriented to direct and/or condition a flow of air (e.g., boundary layer airflow) into the fan 212 to, e.g., increase an efficiency of the fan 212, or reduce a distortion of the air flowing therein. In some embodiments, the inlet guide vanes 206 may be configured as fixed inlet guide vanes extending between the fan casing 218 and the core 219. Alternatively, as in this example embodiment, the inlet guide vanes 206 may be configured as variable inlet guide vanes. In this regard, the inlet guide vanes 206 may be pitched about their respective pitch axes to control incoming airflow, such as boundary layer airflow flowing along the fuselage 112 (FIG. 1).

Moreover, for this embodiment, the fan casing 218 completely surrounds the fan 212, and particularly the plurality of fan blades 213. Accordingly, for this embodiment, the fan 212 may be referred to as a ducted fan. In some embodiments, with reference also to FIG. 3, all fans 212, 222, 232, 242, 252 are fully ducted. However, in other embodiments, at least one of the fans of the fan array 202 is fully ducted, i.e., where the blades of a fan are fully or annularly encased within a fan casing or nacelle. In yet other embodiments, at least one of the fans of the fan array 202 is partially ducted, i.e., the where the blades of a fan are encased in part by a fan casing or nacelle. In some embodiments, all of the fans of the fan array 202 are partially ducted. In some further embodiments, at least one of the fans is unducted, i.e., not encased by a fan casing or nacelle. For instance, in some embodiments, all of the fans of the fan array 202 are unducted.

Referring particularly to FIG. 4, the fan shaft 215 is mechanically coupled to the electric machine 214 within the core 219, such that the electric machine 214 drives the fan 212 through the fan shaft 215. The fan shaft 215 is supported by one or more bearings 208, such as one or more roller bearings, ball bearings, or any other suitable bearings. Additionally, the electric machine 214 may be an inrunner electric motor (i.e., including a rotor positioned radially inward of a stator), or alternatively may be an outrunner electric motor (i.e., including a stator positioned radially inward of a rotor), or alternatively, still, may be an axial flux electric motor (i.e., with the rotor neither outside the stator nor inside the stator, but rather offset from it along the axis of the electric motor).

As noted above, the electrical power source (e.g., one or more of the electric machines 164, 174 or one or more of the electric energy storage units 180) is electrically connected with the electric machine 214 for providing electrical power to thereto. More particularly, the electric machine 214 is electrically connected with the electrical power source through the electrical power bus 184, and more particularly, through the one or more electrical cables or lines 186 extending therebetween.

With reference again to FIGS. 1 through 3, at least two fans of the fan array 202 are positioned primarily above the mean line 115 and at least two fans of the fan array 202 are positioned primarily below the mean line 115, e.g., along the vertical direction V. Particularly, for this embodiment, the fan 212 of the first propulsor 210 and the fan 222 of the second propulsor 220 are positioned primarily above the mean line 115. Thus, at least two fans of the fan array 202 are positioned primarily above the mean line 115. Indeed, as depicted best in FIG. 3, the fans 212, 222 are positioned entirely above the mean line 115, e.g., along the vertical direction V.

Further, for this embodiment, the fan 232 of the third propulsor 230, the fan 242 of the fourth propulsor 240, and the fan 252 of the fifth propulsor 250 are positioned primarily below the mean line 115, e.g., along the vertical direction V. Thus, at least two fans of the fan array 202 are positioned primarily below the mean line 115. Indeed, as shown in FIG. 3, the fans 232, 242, 252 are positioned entirely below the mean line 115, e.g., along the vertical direction V. Moreover, as shown, the fan 252 of the fifth propulsor 250 is positioned between the fan 232 of the third propulsor 230 and the fan 242 of the fourth propulsor 240. An axis of rotation AX5 of the fifth fan 252 is aligned with the longitudinal centerline 114 of the aircraft 100 along the lateral direction L2.

As used herein, "primarily" means that a disk defined by a given fan is positioned 50% or more above or below the stated object along the vertical direction V. The disk associated with a fan is an area that is swept out by the fan during operation. For example, where a fan has a radius R extending from a tip of one of the blades to an axis of rotation of the fan, the disk may be defined by as *A = πR*², wherein A is the area of the disk.

In addition, for this embodiment, at least one fan positioned primarily above the mean line 115 is positioned on the first side 124 of the aircraft 100 along the lateral direction L2 and at least one fan positioned primarily above the mean line 115 is positioned on the second side 126 of the aircraft 100 along the lateral direction L2. Particularly, as shown in FIG. 3, the fan 212 of the first propulsor 210 is positioned on the first side 124 of the aircraft 100 along the lateral direction L2 and the fan 222 of the second propulsor 220 is positioned on the second side 126 of the aircraft 100 along the lateral direction L2. Further, for this embodiment, at least one fan positioned primarily below the mean line 115 is positioned on the first side 124 of the aircraft 100 along the lateral direction L2 and at least one fan positioned primarily below the mean line 115 is positioned on the second side 126 of the aircraft 100 along the lateral direction L2. As depicted in FIG. 3, the fan 232 of the third propulsor 230 is positioned on the first side 124 of the aircraft 100 along the lateral direction L2 and the fan 242 of the fourth propulsor 240 is positioned on the second side 126 of the aircraft 100 along the lateral direction L2.

As further depicted, the fans 212, 222, 232, 242, 252 of the fan array 202 are encased by an outer nacelle 260. The outer nacelle 260 can be a single annular component or can be segmented. For instance, the outer nacelle 260 can include a first segment encasing fan 212 and spanning between the vertical stabilizer 132 and the horizontal stabilizer 136 extending from the fuselage 112 at the first side 124, a second segment encasing fan 222 and spanning between the vertical stabilizer 132 and the horizontal stabilizer 136 extending from the fuselage 112 at the second side 126, and a third segment encasing fans 232, 242, 252 and spanning between the horizontal stabilizer 136 extending from the fuselage 112 at the first side 124 and the horizontal stabilizer 136 extending from the fuselage 112 at the second side 126.

As shown best in FIG. 2, the outer nacelle 260 extends between a leading edge 262 and a trailing edge 264, e.g., along the longitudinal direction L1. As shown best in FIG. 3, one or more partition walls can extend between the fuselage 112 and the outer nacelle 260. Each partition wall can separate adjacent fans of the fan array 202. For instance, for this example embodiment, a first partition wall 270 extends between the fuselage 112 and the outer nacelle 260 and partitions or separates the fan 232 of the third propulsor 230 and the fan 252 of the fifth propulsor 250. Also, a second partition wall 272 extends between the fuselage 112 and the outer nacelle 260 and partitions or separates the fan 242 of the fourth propulsor 240 and the fan 252 of the fifth propulsor 250. The first and second partition walls 270, 272 may advantageously provide mounting structures for the fans casings of the fans 232, 242, 252 and may minimize the loss from fan blade tips, e.g., by directing airflow generally aft along the longitudinal direction L1 as opposed to toward another fan.

Generally, the first partition wall 270 extends outward from the fuselage 112 in a plane orthogonal to the circumferential direction C. In this regard, the first partition wall 270 extends radially outward from the fuselage 112 with respect to the longitudinal centerline 114 and also extends axially or along the longitudinal direction L1 (FIGS. 1 and 2) of the aircraft 100. A proximal end of the first partition wall 270 is connected to the fuselage 112 and its distal end is connected to the outer nacelle 260. In this regard, the first partition wall 270 connects the fuselage 112 and the outer nacelle 260.

Further, as noted above, the first partition wall 270 extends axially or along the longitudinal direction L1. More specifically, the first partition wall 270 can extend between a leading edge and a trailing edge, e.g., along the axial or longitudinal direction L1. In some embodiments, the first partition wall 270 may extend the full axial or longitudinal length of the outer nacelle 260, i.e., from the leading edge 262 to the trailing edge 264 of the outer nacelle 260. In other embodiments, the first partition wall 270 may extend less than the full axial or longitudinal length of the outer nacelle 260. For instance, in some embodiments, the leading edge of the first partition wall 270 may be aligned with or positioned aft of the leading edge of a fan casing of at least one of the fans 232, 252 along the longitudinal direction L1, wherein the fan casing of the at least one fan is positioned aft of the leading edge 262 of the outer nacelle 260 along the longitudinal direction L1. Further, in such embodiments, the trailing edge of the first partition wall 270 may be positioned forward of, aligned with, or aft of the trailing edge of the fan casing of at least one of the fans 232, 252 along the longitudinal direction L1, wherein the trailing edge of the fan casing of the at least one fan may be positioned forward of, aligned with, or aft of the trailing edge 264 of the outer nacelle 260 along the longitudinal direction L1.

Similar to the first partition wall 270, the second partition wall 272 extends outward from the fuselage 112 in a plane orthogonal to the circumferential direction C. In this regard, the second partition wall 272 extends radially outward from the fuselage 112 with respect to the longitudinal centerline 114 and also extends axially or along the longitudinal direction L1 (FIGS. 1 and 2) of the aircraft 100. A proximal end of the second partition wall 272 is connected to the fuselage 112 and its distal end is connected to the outer nacelle 260. The second partition wall 272 is circumferentially spaced from the first partition wall 270.

Moreover, as noted, the second partition wall 272 extends axially or along the longitudinal direction L1. More specifically, the second partition wall 272 can extend between a leading edge and a trailing edge, e.g., along the axial or longitudinal direction L1. In some embodiments, the second partition wall 272 may extend the full axial or longitudinal length of the outer nacelle 260, i.e., from the leading edge 262 to the trailing edge 264 of the outer nacelle 260. In other embodiments, the second partition wall 272 may extend less than the full axial or longitudinal length of the outer nacelle 260. For instance, in some embodiments, the leading edge of the second partition wall 272 may be aligned with or positioned aft of the leading edge of a fan casing of at least one of the fans 242, 252 along the longitudinal direction L1, wherein the fan casing of the at least one fan is positioned aft of the leading edge 262 of the outer nacelle 260 along the longitudinal direction L1. Further, in such embodiments, the trailing edge of the second partition wall 272 may be positioned forward of, aligned with, or aft of the trailing edge of the fan casing of at least one of the fans 242, 252 along the longitudinal direction L1, wherein the trailing edge of the fan casing of the at least one fan may be positioned forward of, aligned with, or aft of the trailing edge 264 of the outer nacelle 260 along the longitudinal direction L1.

As shown in FIG. 3, the fan casing of fan 252 can be connected to and supported by the first and second partition walls 270, 272, as well as by the outer nacelle 260. The fan casing of fan 232 can be connected to and supported by the first partition wall 270, the outer nacelle 260, and for this embodiment, the horizontal stabilizer 136 extending from the fuselage 112 at the first side 124. The fan casing of fan 242 can be connected to and supported by the second partition wall 272, the outer nacelle 260, and for this embodiment, the horizontal stabilizer 136 extending from the fuselage 112 at the second side 126. **In** this regard, fans 232, 242, 252 are each supported by at least three structures.

The fan casing of fan 212 can be connected to and supported by the horizontal stabilizer 136 extending from the fuselage 112 at the first side 124, the outer nacelle 260, and the vertical stabilizer 132. The fan casing of fan 222 can be connected to and supported by the horizontal stabilizer 136 extending from the fuselage 112 at the second side 126, the outer nacelle 260, and the vertical stabilizer 132. **In** this regard, fans 212, 222 are each supported by at least three structures.

In some alternative embodiments, the boundary layer ingestion system 200 need not include partition walls. In such alternative embodiments, one or more outlet guide vanes of each fan of the fan array 202 can extend through their respective fan casings and can connect the fan to the fuselage 112 and one or more outlet guide vanes of each fan of the fan array 202 can extend through their respective fan casings and can connect the fan to the outer nacelle 260. In yet other example embodiments, the boundary layer ingestion system 200 need not include the outer nacelle 260. In such embodiments, for example, one or more outlet guide vanes of each fan of the fan array 202 can extend through their respective fan casings and can connect the fan to the fuselage 112.

Further, as depicted best in FIG. 3, the fan array 202 includes at least two fans of different sizes. Particularly, for this embodiment, the fan array 202 includes at least three different sizes of fans. As shown, the fan 252 of the fifth propulsor 250 is the largest fan of the fan array 202, as measured by the distance from the axis of rotation AX5 to a tip of one of the fan blades of the fan 252. The fans 212, 222 of the first and second propulsors 210, 220 are of the same size as one another but are smaller than the fan 252 of the fifth propulsor 250. The fans 232, 242 of the third and fourth propulsors 230, 240 are of the same size as one another but are smaller than the fans 212, 222 of the first and second propulsors 210, 220. In this regard, the fans 232, 242 of the third and fourth propulsors 230, 240 are smaller than the fan 252 of the fifth propulsor 250. Accordingly, the fan array 202 includes at least three different sizes of fans in this example embodiment. The size of each fan is measured by the distance from its axis of rotation to a tip of one of its fan blades. By having fans of the fan array 202 being of different sizes, the fans can be arranged more adeptly to capture boundary layer airflow despite the configuration of the empennage 119, which includes the vertical stabilizer 132 and the horizontal stabilizer 136 in this embodiment, and the shape of the fuselage 112.

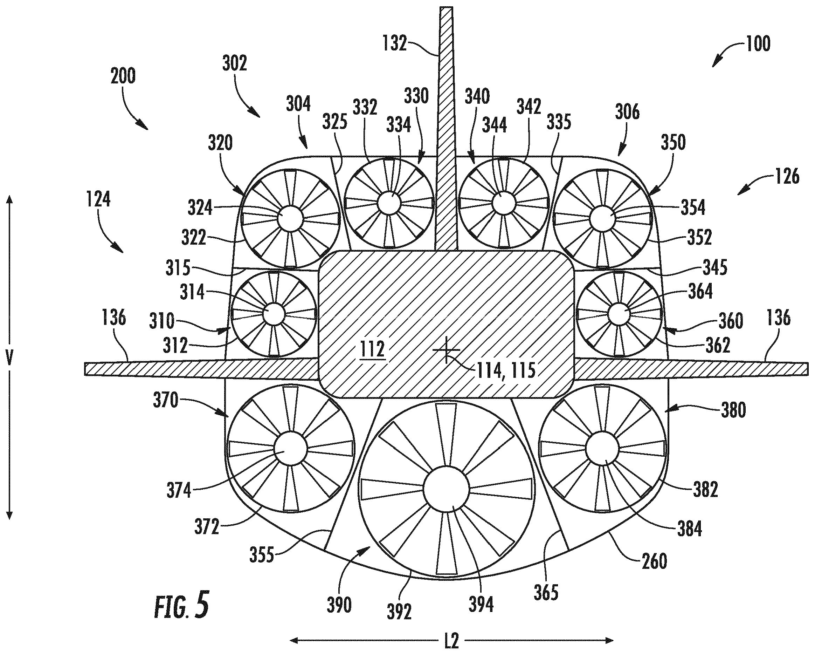

FIG. 5 provides a schematic aft-looking-forward view of another aircraft 100 according to one example embodiment of the present disclosure. As shown, for this embodiment, the fuselage 112 has a non-circular cross-sectional shape. Particularly, for this embodiment, the fuselage 112 has rectangular shape with curved edges. Further, as shown in FIG. 5, the propulsion system includes a boundary layer ingestion system 200 operable to ingest boundary layer airflow flowing along the fuselage 112 despite its non-circular cross-sectional shape.

As depicted, for the embodiment of FIG. 5, the boundary layer ingestion system 200 includes a first propulsor 310, a second propulsor 320, a third propulsor 330, a fourth propulsor 340, a fifth propulsor 350, a sixth propulsor 360, a seventh propulsor 370, an eighth propulsor 380, and a ninth propulsor 390. Each propulsor 310, 320, 330, 340, 350, 360, 370, 380, 390 has a fan rotatable about an axis of rotation. Moreover, for this embodiment, each propulsor 310, 320, 330, 340, 350, 360, 370, 380, 390 has an associated electric machine.

Specifically, the first propulsor 310 has a fan 312 and an electric machine 314 operatively coupled thereto. Likewise, the second propulsor 320 has a fan 322 and an electric machine 324 operatively coupled thereto, the third propulsor 330 has a fan 332 and an electric machine 334 operatively coupled thereto, the fourth propulsor 340 has a fan 342 and an electric machine 344 operatively coupled thereto, the fifth propulsor 350 has a fan 352 and an electric machine 354 operatively coupled thereto, the sixth propulsor 360 has a fan 362 and an electric machine 364 operatively coupled thereto, the seventh propulsor 370 has a fan 372 and an electric machine 374 operatively coupled thereto, the eighth propulsor 380 has a fan 382 and an electric machine 384 operatively coupled thereto, and the ninth propulsor 390 has a fan 392 and an electric machine 394 operatively coupled thereto. The propulsors 310, 320, 330, 340, 350, 360, 370, 380, 390 can be configured as described above.

For this embodiment, the fans of the fan array 302 positioned primarily above the mean line 115 are organized into a first set 304 of fans and a second set 306 of fans. As depicted, the fans of the first set 304 include fans 312, 322, 332 and the fans of the second set 306 include fans 342, 352, 362. In this regard, the first set 304 includes at least three fans and the second set 306 of fans includes at least three fans. Moreover, the fans 312, 322, 332 of the first set 304 are positioned on the first side 124 of the aircraft 100 along the lateral direction L2 and the fans 342, 352, 362 of the second set 306 are positioned on the second side 126 of the aircraft 100 along the lateral direction L2.

Further, for the depicted embodiment of FIG. 5, at least one fan positioned primarily below the mean line 115 is positioned on the first side 124 of the aircraft 100 along the lateral direction L2 and at least one fan positioned primarily below the mean line 115 is positioned on the second side 126 of the aircraft 100 along the lateral direction L2. As depicted in FIG. 5, the fan 372 of the seventh propulsor 370 is positioned on the first side 124 of the aircraft 100 along the lateral direction L2 and the fan 382 of the eighth propulsor 380 is positioned on the second side 126 of the aircraft 100 along the lateral direction L2.

Further, as depicted best in FIG. 5, the fans of the fan array 302 are of varying sizes. Particularly, for this embodiment, the fan array 302 includes at least four different sizes of fans. As shown, fans 312, 332, 342, 362 are all a first size. Fans 322, 352 are all a second size, which is larger than the first size. Fans 372, 382 are all a third size, which is larger than the second size. Fan 392 is a fourth size, which is larger than the third size. The size of each fan is measured by the distance from its axis of rotation to a tip of one of its fan blades. By having fans of the fan array 302 being of different sizes, the fans can be arranged more adeptly to capture boundary layer airflow despite the configuration of the empennage 119, which includes the vertical stabilizer 132 and the horizontal stabilizer 136 in this embodiment, and the non-circular shape of the fuselage 112.

Moreover, for this embodiment, each fan is separated from an adjacent fan by a partition wall that extends between the fuselage 112 and the outer nacelle 260. The partition walls can be similarly constructed as the partition walls noted above with respect to the embodiment of FIG. 3. As shown, for this embodiment, a first partition wall 315 extends between the fuselage 112 and the outer nacelle 260 and separates fan 312 and fan 322. A second partition wall 325 extends between the fuselage 112 and the outer nacelle 260 and separates fan 322 and fan 332. A third partition wall 335 extends between the fuselage 112 and the outer nacelle 260 and separates fan 342 and fan 352. A fourth partition wall 345 extends between the fuselage 112 and the outer nacelle 260 and separates fan 352 and fan 362. A fifth partition wall 355 extends between the fuselage 112 and the outer nacelle 260 and separates fan 372 and fan 392. A sixth partition wall 365 extends between the fuselage 112 and the outer nacelle 260 and separates fan 382 and fan 392. The partition walls 315, 325, 335, 345, 355, 365 may advantageously provide mounting structures for the fans casings of the fans of the fan array 302 and may minimize the loss from fan blade tips, e.g., by directing airflow generally aft along the longitudinal direction L1 as opposed to toward another fan.

Returning now to FIGS. 1, 2 and 3, notably, at least two fans of the fan array 202 fans can be controlled independently of one another. For instance, one or more processors of the computing system 190 can be configured to control the thrust output of at least two fans of the fan array 202 independently of one another. As one example, the computing system 190 can be configured to control the thrust output of the fan 212 of the first propulsor 210 and the fan 222 of the second propulsor 220 independently of one another so that they produce respective thrust outputs, which can be the same or different thrust outputs. In this regard, at least two fan of the fan array 202 can be independently controlled, e.g., as per the need of boundary layer ingestion suction requirements as will be explained further below. This may ultimately optimize the reduction of drag on the aircraft 100 whilst still allowing the propulsion system 150 to meet the demanded thrust requirements of the aircraft 100.

In some embodiments, more than two fans of the fan array 202 can be independently controlled. For instance, in such embodiments, each fan 212, 222, 232, 242, 252 of the fan array 202 can be independently controlled. Particularly, the one or more processors of the computing system 190 can be configured to control the thrust output of each fan of the fan array 202 independently of one another. For example, the computing system 190 can be configured to control the thrust output of the fan 212, 222, 232, 242, 252 independently of one another so that they produce respective thrust outputs, which can be the same or different outputs. This may provide flexibility in reducing drag on the aircraft 100 whilst still meeting the demanded thrust requirements of the aircraft 100, among other benefits.

By way of example, with reference to FIGS. 1 through 3 and 6, in controlling the thrust output of the at least two fans of the fan array 202 independent of one another, the one or more processors of the computing system 190 can be configured to receive data 280 indicating one or more operating conditions associated with the aircraft 100. The operating conditions can include, without limitation, ambient conditions, e.g., ambient air temperature, humidity, wind conditions, air pressure, weather conditions, etc., the airspeed of the aircraft 100, the altitude of the aircraft 100, the health of one or more of the fans of the fan array 202, the health of one or more of the primary propulsors 160, 170 (or components thereof), the current electrical power demanded by the electrical loads and/or systems of the aircraft 100.

Further, notably, in some embodiments, the data 280 indicating the one or more operating conditions associated with the aircraft 100 can include a sensed or derived velocity of the boundary layer airflow at each of the at least two fans of the fan array 202 that are independently controllable. In some instances, particularly where each fan of the fan array 202 is independently controllable, the data 280 indicating the one or more operating conditions associated with the aircraft 100 can include a sensed or derived velocity of the boundary layer airflow at each of the fans of the fan array 202. For instance, a sensor can be placed at or proximate each fan of the fan array 202. The sensors can sense the local speed of the boundary layer airflow flowing into, through, or from the fans of the fan array 202 depending on the position of the sensors. The sensed sensor data can be provided to the one or more processors of the computing system 190. The raw sensed data can be received as part of the data 280 or derived values based on the sensed data can be received as part of the data 280. In some embodiments, the local speed of the boundary layer airflow into, through, or from the fans of the fan array 202 can be derived from other sensed parameters, such as the airspeed of the aircraft 100, the altitude, and ambient conditions.

With the data 280 received, the one or more processors of the computing system 190 is configured to determine a boundary layer ingestion suction requirement 282 for each of the fans of the fan array 202 that are to be independently controlled based at least in part on the data 280. The boundary layer ingestion suction requirement 282 can be determined as a value that corresponds with the thrust output needed by the fan to optimally reduce the drag on the aircraft 100 along the fuselage 112 at the local location associated with a given fan. The boundary layer ingestion suction requirement 282 for a given fan can be determined based at least in part on the local speed at the given fan and ambient conditions, among other possible operating conditions.

For instance, in embodiments where at least two fans of the fan array 202 are to be independently controlled, the one or more processors of the computing system 190 can determine a boundary layer ingestion suction requirement 282 for each of the at least two fans based at least in part on the data 280. In this way, the thrust output of the at least two fans of the fan array can be independently controlled to their respective thrust outputs based at least in part on their respective boundary layer ingestion suction requirements 282.

Particularly, based on the boundary layer ingestion suction requirements 282 determined for each of the at least two fans based at least in part on the data 280, the one or more processors of the computing system can generate one or more commands 284. The one or more commands 284, when executed, can cause one or more controllable devices of the aircraft 100 to provide electrical power to the electric machines associated with the at least two fans so that that fans meet their respective boundary layer ingestion suction requirements 282.

For instance, supposing the fan 212 of the first propulsor and the fan 222 of the second propulsor 220 are to be independently controlled. The one or more processors of the controller 182 can cause, based on the one or more generated commands 284 (which are generated based on the boundary layer ingestion suction requirement 282 determined for the fan 212), components of the power bus 184 (e.g., one or more switching devices of a power converter) to provide electrical power from the one or more electric energy storage units 180, the electric machine 164, and/or the electric machine 174 to the electric machine 214 so that the fan 212 is controlled to a first rotational speed. Likewise, the one or more processors of the controller 182 can cause, based on the one or more generated commands 284 (which are generated based on the boundary layer ingestion suction requirement 282 determined for the fan 222), components of the power bus 184 to provide electrical power from the one or more electric energy storage units 180, the electric machine 164, and/or the electric machine 174 to the electric machine 214 so that the fan 222 is controlled to a second rotational speed, wherein the first and second rotational speed can be the same or different speeds.

Where other fans are to be independently controlled in addition to fans 212, 222, the one or more processors of the controller 182 can cause, based on the generated one or more commands 284, components of the power bus 184 to provide electrical power from the one or more electric energy storage units 180, the electric machine 164, and/or the electric machine 174 to their electric machines so that the fans are controlled to respective rotational speeds, which can be the same or different from one another. In this regard, in controlling the thrust output of the fans of the fan array 202 that are to be independently controlled, the fans can be controlled to respective rotational speeds. Controlling the thrust outputs of the fans, or in this example, the rotational speed of the fans, enables the incoming boundary layer airflow to be locally accelerated at different rates according to the local boundary layer ingestion suction needs.

In some embodiments, in addition or alternatively to independently controlling the rotational speeds of the fans of the fan array 202 to control their respective thrust outputs, the pitch of the inlet guide vanes of the fans can be independently controlled to control the thrust output of the fans. Particularly, in controlling the thrust output of the at least two fans of the fan array 202 independent of one another, inlet guide vanes of a first fan of the at least two fans and inlet guide vanes of a second fan of the at least two fans can be independently controlled to respective pitch positions. In this way, the incoming boundary layer airflow can be locally accelerated at different rates according to the local boundary layer ingestion suction needs.

Further, in some embodiments, in addition or alternatively to independently controlling the rotational speeds of the fans of the fan array 202 to control their respective thrust outputs, the pitch of fan blades of the fans can be independently controlled to control the thrust output of the fans. Particularly, in controlling the thrust output of the at least two fans of the fan array 202 independent of one another, fan blades of a first fan of the at least two fans and fan blades of a second fan of the at least two fans can be independently controlled to respective pitch positions. In this way, the incoming boundary layer airflow can be locally accelerated at different rates according to the local boundary layer ingestion suction needs.

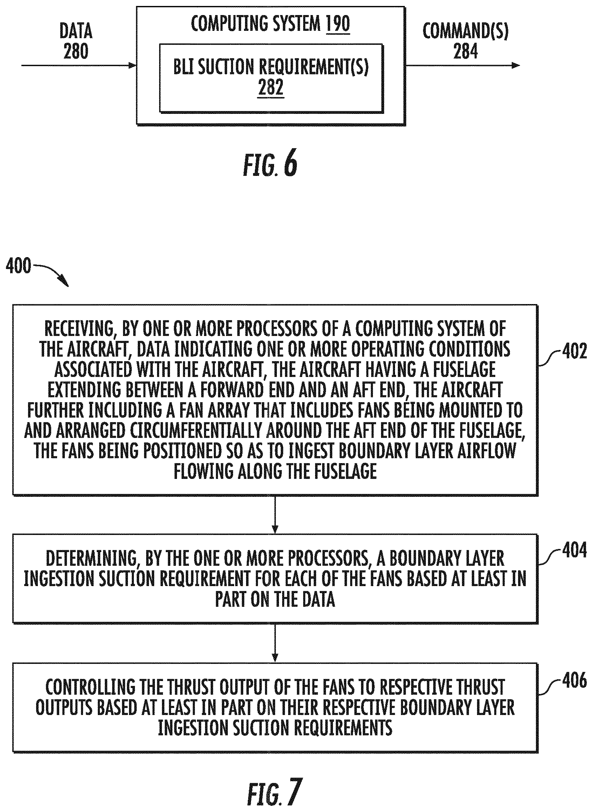

FIG. 7 provides a flow diagram of an exemplary method (400) of operating an aircraft having a boundary layer ingestion system according to one example embodiment of the present disclosure. For instance, the exemplary method (400) may be utilized to operate the aircraft 100 of FIGS. 1 through 3, FIG. 5, or some other aircraft having a boundary layer ingestion system that includes a distributed fan array as described herein. It should be appreciated that the method (400) is discussed herein to describe exemplary aspects of the present subject matter and is not intended to be limiting.

At (402), the method (400) includes receiving, by one or more processors of a computing system of an aircraft, data indicating one or more operating conditions associated with the aircraft. The aircraft includes a fuselage extending between a forward end and an aft end and a fan array that includes fans being mounted to and arranged circumferentially around the aft end of the fuselage. As will be explained below, the data can be used by the one or more processors to determine a boundary layer ingestion suction requirement for each of the fans of the fan array.

The operating conditions can include, without limitation, ambient conditions, e.g., ambient air temperature, humidity, wind conditions, air pressure, weather conditions, etc., the airspeed of the aircraft, the altitude of the aircraft, the health of one or more of the fans of the fan array, the health of one or more of the primary propulsors or components thereof, the current electrical power demanded by the electrical loads and/or systems of the aircraft, a sensed or derived velocity of the boundary layer airflow at each of the fans of the fan array, or a combination of the foregoing. The operating conditions can be sensed, calculated, or provided values.

At (404), the method (400) includes determining, by the one or more processors, a boundary layer ingestion suction requirement for each of the fans based at least in part on the data. The boundary layer ingestion suction requirement determined for a given fan of the fan array can be a value that corresponds with the thrust output needed by the fan to optimally reduce the drag on the aircraft along the fuselage at the local location associated with the given fan. For instance, based on the ambient conditions and the speed of the boundary layer airflow at the given fan, the boundary layer ingestion suction requirement, i.e., the optimal thrust output to reduce drag on the aircraft at that localized location, for the fan can be determined. As one example, the one or more processors can use the ambient conditions and the speed of the boundary layer airflow at the given fan to lookup the boundary layer ingestion suction requirement, e.g., via a lookup table. In this regard, the boundary layer ingestion suction requirement for a given fan can be determined based at least in part on the local speed at the given fan and ambient conditions, among other possible operating conditions. A boundary layer ingestion suction requirement can be determined for each fan of the fan array.

At (406), the method (400) includes controlling the thrust output of the fans to respective thrust outputs based at least in part on their respective boundary layer ingestion suction requirements. By way of example, in controlling the thrust output of the fans to respective thrust outputs, the one or more processors can independently control the fans to respective rotational speeds based at least in part on their respective boundary layer ingestion suction requirements. In this regard, the fans can locally reduce the drag on the aircraft in an optimal manner. Additionally or alternatively, the one or more processors can independently control the pitch position of the fan blades of each fan based at least in part on their respective boundary layer ingestion suction requirements. Additionally or alternatively, the one or more processors can independently control the pitch position of the inlet guide vanes of each fan based at least in part on their respective boundary layer ingestion suction requirements.

FIG. 8 provides an example computing system 500 according to example embodiments of the present disclosure. The computing system 190 described herein may include various components and perform various functions of the computing system 500 described below, for example.

As shown in FIG. 8, the computing system 500 can include one or more computing device(s) 510. The computing device(s) 510 can include one or more processor(s) 510A and one or more memory device(s) 510B. The one or more processor(s) 510A can include any suitable processing device, such as a microprocessor, microcontroller, integrated circuit, logic device, and/or other suitable processing device. The one or more memory device(s) 510B can include one or more computer-readable media, including, but not limited to, non-transitory computer-readable media, RAM, ROM, hard drives, flash drives, and/or other memory devices.

The one or more memory device(s) 510B can store information accessible by the one or more processor(s) 510A, including computer-readable instructions 510C that can be executed by the one or more processor(s) 510A. The instructions 510C can be any set of instructions that when executed by the one or more processor(s) 510A, cause the one or more processor(s) 510A to perform operations. In some embodiments, the instructions 510C can be executed by the one or more processor(s) 510A to cause the one or more processor(s) 510A to perform operations, such as any of the operations and functions for which the computing system 500 and/or the computing device(s) 510 are configured, such as controlling operation of boundary layer ingestion fans. The instructions 510C can be software written in any suitable programming language or can be implemented in hardware. Additionally, and/or alternatively, the instructions 510C can be executed in logically and/or virtually separate threads on processor(s) 510A. The memory device(s) 510B can further store data 510D that can be accessed by the processor(s) 510A. For example, the data 510D can include models, lookup tables, databases, etc.

The computing device(s) 510 can also include a network interface 510E used to communicate, for example, with the other components of system 500 (e.g., via a communication network). The network interface 510E can include any suitable components for interfacing with one or more network(s), including for example, transmitters, receivers, ports, controllers, antennas, and/or other suitable components. One or more devices can be configured to receive one or more commands from the computing device(s) 510 or provide one or more commands to the computing device(s) 510.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing as long as it does not depart from the scope of the independent claims.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. An aircraft (100), comprising:
a fuselage (112) extending between a forward end and an aft end;
a fan array (202) including fans being mounted to and arranged circumferentially around the aft end of the fuselage, the fans being positioned so as to ingest boundary layer airflow flowing along the fuselage, at least two fans of the fans being of different sizes, **characterized in that** the aircraft further comprises:
a computing system (190) having one or more processors, the one or more processors being configured to:
receive data indicating one or more operating conditions associated with the aircraft (100);
determine a boundary layer ingestion suction requirement such as a value that corresponds with the thrust output needed by the fan to optimally reduce the drag on the aircraft 100 along the fuselage, for each of the at least two fans of the fan array based at least in part on the data; and
independently control a thrust output of each of the at least two fans of the fan array based at least in part on their respective boundary layer ingestion suction requirements.

2. The aircraft (100) of any preceding claim, wherein the at least two fans include a first fan, a second fan, and a third fan which are each different sizes.

3. The aircraft (100) of any preceding claim, wherein each one of the fans of the fan array is an electrically-driven fan.

4. The aircraft (100) of any preceding claim, wherein each one of the fans of the fan array has an associated electric machine operatively coupled thereto.

5. The aircraft (100) of any preceding claim, wherein the fuselage (112) of the aircraft defines a mean line, and wherein the fans of the fan array (202) include at least two fans positioned primarily above the mean line and at least two fans positioned primarily below the mean line.

6. The aircraft (100) of any preceding claim, wherein the aircraft defines a lateral direction and a longitudinal centerline, and wherein the at least two fans positioned primarily above the mean line include a first fan and a second fan, wherein the first fan is positioned on a first side of the aircraft along the lateral direction and the second fan is positioned on a second side of the aircraft along the lateral direction, the first side and the second side being defined by the longitudinal centerline.

7. The aircraft (100) of any preceding claim, wherein the at least two fans positioned primarily below the mean line include a third fan, a fourth fan, and a fifth fan positioned between the third fan and the fourth fan, and wherein an axis of rotation of the fifth fan is aligned with a longitudinal centerline defined by the aircraft along a lateral direction.

8. The aircraft (100) of any preceding claim, wherein the at least two fans positioned primarily above the mean line include a first set of fans and a second set of fans, the fans of the first set being positioned on a first side of the aircraft along a lateral direction and the fans of the second set being positioned on a second of the aircraft along the lateral direction, the first side and the second side being defined by a longitudinal centerline of the aircraft, and wherein the first set of fans includes at least three fans and the second set of fans includes at least three fans.

9. The aircraft (100) of any preceding claim, wherein at least one fan of the fans of the fan array (202) includes inlet guide vanes (204) positioned upstream of a plurality of fan blades of the at least one fan.

10. The aircraft (100) of any preceding claim, wherein at least a portion of at least one of the fans extends aft of a leading edge of a vertical stabilizer (132) of the aircraft.

11. The aircraft (100) of any preceding claim, wherein the fuselage (112) has a non-circular cross-sectional shape.

12. The aircraft (100) of any preceding claim, wherein the aircraft defines a circumferential direction, and wherein the aircraft further comprises:
An outer nacelle encasing (260) each one of the fans of the fan array; and
at least one partition wall (270) connecting the fuselage and the outer nacelle and separating adjacent fans of the fans of the fan array.

13. A method (400) of operating an aircraft, the method comprising:
receiving, by one or more processors of a computing system of the aircraft, data indicating one or more operating conditions associated with the aircraft, the aircraft having a fuselage extending between a forward end and an aft end, the aircraft further including a fan array that includes fans being mounted to and arranged circumferentially around the aft end of the fuselage, the fans being positioned so as to ingest boundary layer airflow flowing along the fuselage, at least two fans of the fans being of different sizes;
determining, by the one or more processors, a boundary layer ingestion suction requirement such as a value that corresponds with the thrust output needed by the fan to optimally reduce the drag on the aircraft 100 along the fuselage, for each of the fans based at least in part on the data, and
independently controlling the fans to respective thrust outputs based at least in part on their respective boundary layer ingestion suction requirements.

## Patentansprüche

1. Luftfahrzeug (100), umfassend:
einen Rumpf (112), der sich zwischen einem Vorausende und einem Heckende erstreckt;
eine Fan-Anordnung (202), einschließlich Fans, die um das Heckende des Rumpfs montiert und um diesen kreisförmig angeordnet sind, wobei die Fans positioniert sind, um den Grenzschichtluftstrom aufzunehmen, der entlang des Rumpfs strömt, wobei mindestens zwei Fans der Fans von unterschiedlicher Größe sind, **dadurch gekennzeichnet, dass** das Luftfahrzeug ferner umfasst:
ein Rechensystem (190), das einen oder mehrere Prozessoren aufweist, wobei der eine oder die mehreren Prozessoren konfiguriert sind zum:
Empfangen von Daten, die eine oder mehrere Betriebsbedingungen angeben, die zu dem Luftfahrzeug (100) zugehörig sind;
Bestimmen einer Grenzschicht-Ansaugsoganforderung, wie ein Wert, der der Schubleistung entspricht, die von dem Fan benötigt wird, um den Luftwiderstand an dem Luftfahrzeug 100 entlang des Rumpfs für jeden der mindestens zwei Fans der Fan-Anordnung, mindestens teilweise basierend auf den Daten, optimal zu reduzieren; und
unabhängiges Steuern einer Schubleistung von jedem der mindestens zwei Fans der Fan-Anordnung, mindestens teilweise basierend auf ihren jeweiligen Grenzschicht-Ansaugsoganforderungen.

2. Luftfahrzeug (100) nach einem der vorstehenden Ansprüche, wobei die mindestens zwei Fans einen ersten Fan, einen zweiten Fan und einen dritten Fan einschließen, die jeweils von unterschiedlicher Größe sind.

3. Luftfahrzeug (100) nach einem der vorstehenden Ansprüche, wobei jeder der Fans der Fan-Anordnung ein elektrisch angetriebener Fan ist.

4. Luftfahrzeug (100) nach einem der vorstehenden Ansprüche, wobei jeder der Fans der Fan-Anordnung eine zugehörige elektrische Maschine aufweist, die damit wirkgekoppelt ist.

5. Luftfahrzeug (100) nach einem der vorstehenden Ansprüche, wobei der Rumpf (112) des Luftfahrzeugs eine Mittellinie definiert und wobei die Fans der Fan-Anordnung (202) mindestens zwei Fans, die hauptsächlich über der Mittellinie positioniert sind, und mindestens zwei Fans, die hauptsächlich unter der Mittellinie positioniert sind, einschließen.

6. Luftfahrzeug (100) nach einem der vorstehenden Ansprüche, wobei das Luftfahrzeug eine Querrichtung und eine Längsmittellinie definiert und wobei die mindestens zwei Fans, die hauptsächlich über der Mittellinie positioniert sind, einen ersten Fan und einen zweiten Fan einschließen, wobei der erste Fan auf einer ersten Seite des Luftfahrzeugs entlang der Querrichtung positioniert ist und der zweite Fan auf einer zweiten Seite des Luftfahrzeugs entlang der Querrichtung positioniert ist, wobei die erste Seite und die zweite Seite durch die Längsmittellinie definiert sind.

7. Luftfahrzeug (100) nach einem der vorstehenden Ansprüche, wobei die mindestens zwei Fans, die hauptsächlich unterhalb der Mittellinie positioniert sind, einen dritten Fan, einen vierten Fan und einen fünften Fan, der zwischen dem dritten und dem vierten Fan positioniert ist, einschließen, und wobei eine Drehachse des fünften Fans mit einer Längsmittellinie ausgerichtet ist, die durch Luftfahrzeug entlang einer Querrichtung definiert ist.

8. Luftfahrzeug (100) nach einem der vorstehenden Ansprüche, wobei die mindestens zwei Fans, die hauptsächlich über der Mittellinie positioniert sind, einen ersten Satz von Fans und einen zweiten Satz von Fans einschließen, wobei die Fans des ersten Satzes auf einer ersten Seite des Luftfahrzeugs entlang einer Querrichtung positioniert sind und die Fans des zweiten Satzes auf einer zweiten Seite des Luftfahrzeugs entlang der Querrichtung positioniert sind, wobei die erste Seite und die zweite Seite durch eine Längsmittellinie des Luftfahrzeugs definiert sind, und wobei der erste Satz von Fans mindestens drei Fans einschließt und der zweite Satz von Fans mindestens drei Fans einschließt.

9. Luftfahrzeug (100) nach einem der vorstehenden Ansprüche, wobei mindestens ein Fan der Fans der Fan-Anordnung (202) Einlassleitschaufeln (204) einschließt, die stromaufwärts von einer Vielzahl von Fan-Schaufeln des mindestens einen Fans positioniert sind.

10. Luftfahrzeug (100) nach einem der vorstehenden Ansprüche, wobei sich mindestens ein Abschnitt von mindestens einem der Fans nach achtern einer Vorderkante eines Seitenleitwerks (132) des Luftfahrzeugs erstreckt.

11. Luftfahrzeug (100) nach einem der vorstehenden Ansprüche, wobei der Rumpf (112) eine nicht kreisförmige Querschnittsform aufweist.

12. Luftfahrzeug (100) nach einem der vorstehenden Ansprüche, wobei das Luftfahrzeug eine Umfangsrichtung definiert und wobei das Luftfahrzeug ferner umfasst:
eine äußere Gondel, die jeden der Fans der Fan-Anordnung umhüllt (260); und
mindestens eine Trennwand (270), die den Rumpf und die äußere Gondel verbindet und benachbarte Fans von den Fans der Fan-Anordnung trennt.

13. Verfahren (400) zum Betreiben eines Luftfahrzeugs, das Verfahren umfassend:
Empfangen, durch einen oder mehrere Prozessoren eines Rechensystems des Luftfahrzeugs, von Daten, die eine oder mehrere Betriebsbedingungen angeben, die zu dem Luftfahrzeug zugehörig sind, wobei das Luftfahrzeug einen Rumpf aufweist, der sich zwischen einem Vorausende und einem Heckende erstreckt, wobei das Luftfahrzeug ferner eine Fan-Anordnung einschließt, die Fans einschließt, die um das Heckende des Rumpfs montiert und um diesen kreisförmig angeordnet sind, wobei die Fans positioniert sind, um den Grenzschichtluftstrom aufnehmen, der entlang des Rumpfs strömt, wobei mindestens zwei Fans der Fans von unterschiedlicher Größe sind;
Bestimmen, durch den einen oder die mehreren Prozessoren, einer Grenzschicht-Ansaugsoganforderung, wie ein Wert, der der Schubleistung entspricht, die von dem Fan benötigt wird, um den Luftwiderstand an dem Luftfahrzeug 100 entlang des Rumpfs optimal zu reduzieren,
für jeden der Fans, mindestens teilweise basierend auf den Daten, und unabhängiges Steuern der Fans auf jeweilige Schubleistungen, mindestens teilweise basierend auf ihren jeweiligen Grenzschicht-Ansaugsoganforderungen.

## Revendications

1. Aéronef (100), comprenant :
un fuselage (112) s'étendant entre une extrémité avant et une extrémité arrière ;
un réseau de soufflantes (202) comportant des soufflantes montées sur l'extrémité arrière du fuselage et agencées de manière circonférentielle autour de l'extrémité arrière, les soufflantes étant positionnées de manière à ingérer l'écoulement d'air de la couche limite s'écoulant le long du fuselage, au moins deux soufflantes parmi les soufflantes étant de tailles différentes,
**caractérisé en ce que** l'aéronef comprend en outre :
un système informatique (190) ayant un ou plusieurs processeurs, le ou les processeurs étant configurés pour :
recevoir des données indiquant une ou plusieurs conditions de fonctionnement associées à l'aéronef (100) ;
déterminer une exigence d'aspiration par ingestion de la couche limite, telle qu'une valeur correspondant à la poussée nécessaire à la soufflante pour réduire de manière optimale la traînée sur l'aéronef 100 le long du fuselage, pour chacune des au moins deux soufflantes du réseau de soufflantes, sur la base, au moins en partie, des données ; et
commander indépendamment une poussée de chacun des au moins deux soufflantes du réseau de soufflantes, sur la base, au moins en partie, de leurs exigences respectives en matière d'aspiration par ingestion de la couche limite.

2. Aéronef (100) selon l'une quelconque revendication précédente, dans lequel les au moins deux soufflantes comportent une première soufflante, une deuxième soufflante et une troisième soufflante qui sont chacune de tailles différentes.

3. Aéronef (100) selon l'une quelconque revendication précédente, dans lequel chacune des soufflantes du réseau de soufflantes est une soufflante à entraînement électrique.

4. Aéronef (100) selon l'une quelconque revendication précédente, dans lequel chacune des soufflantes du réseau de soufflantes a une machine électrique associée couplée à celle-ci de manière fonctionnelle.

5. Aéronef (100) selon l'une quelconque revendication précédente, dans lequel le fuselage (112) de l'aéronef définit une ligne moyenne, et dans lequel les soufflantes du réseau de soufflantes (202) comportent au moins deux soufflantes positionnées principalement au-dessus de la ligne moyenne et au moins deux soufflantes positionnées principalement en dessous de la ligne moyenne.

6. Aéronef (100) selon l'une quelconque revendication précédente, dans lequel l'aéronef définit une direction latérale et un axe longitudinal, et dans lequel les au moins deux soufflantes positionnées principalement au-dessus de la ligne moyenne comportent une première soufflante et une deuxième soufflante, dans lequel la première soufflante est positionnée sur un premier côté de l'aéronef le long de la direction latérale et la deuxième soufflante est positionnée sur un second côté de l'aéronef le long de la direction latérale, le premier côté et le second côté étant définis par l'axe longitudinal.

7. Aéronef (100) selon l'une quelconque revendication précédente, dans lequel les au moins deux soufflantes positionnées principalement en dessous de la ligne moyenne comportent une troisième soufflante, une quatrième soufflante et une cinquième soufflante positionnée entre la troisième et la quatrième soufflante, et dans lequel un axe de rotation de la cinquième soufflante est aligné avec un axe longitudinal défini par l'aéronef le long d'une direction latérale.

8. Aéronef (100) selon l'une quelconque revendication précédente, dans lequel les au moins deux soufflantes positionnées principalement au-dessus de la ligne moyenne comportent un premier ensemble de soufflantes et un second ensemble de soufflantes, les soufflantes du premier ensemble étant positionnées sur un premier côté de l'aéronef le long d'une direction latérale et les soufflantes du second ensemble étant positionnées sur un second côté de l'aéronef le long de la direction latérale, le premier côté et le second côté étant définis par un axe longitudinal de l'aéronef, et dans lequel le premier ensemble de soufflantes comporte au moins trois soufflantes et le second ensemble de soufflantes comporte au moins trois soufflantes.

9. Aéronef (100) selon l'une quelconque revendication précédente, dans lequel au moins une soufflante parmi les soufflantes du réseau de soufflantes (202) comporte des aubes directrices d'admission (204) positionnées en amont d'une pluralité d'aubes de soufflante de l'au moins une soufflante.

10. Aéronef (100) selon l'une quelconque revendication précédente, dans lequel au moins une partie d'au moins une des soufflantes s'étend en arrière d'un bord d'attaque d'un stabilisateur vertical (132) de l'aéronef.

11. Aéronef (100) selon l'une quelconque revendication précédente, dans lequel le fuselage (112) a une forme en coupe transversale non circulaire.

12. Aéronef (100) selon l'une quelconque revendication précédente, dans lequel l'aéronef définit une direction circonférentielle, et dans lequel l'aéronef comprend en outre :
une nacelle externe enveloppant (260) chacune des soufflantes du réseau de soufflantes ; et
au moins une paroi de séparation (270) reliant le fuselage et la nacelle externe et séparant les soufflantes adjacentes parmi les soufflantes du réseau de soufflantes.

13. Procédé (400) d'exploitation d'un aéronef, le procédé comprenant :
la réception, par un ou plusieurs processeurs d'un système informatique de l'aéronef, de données indiquant une ou plusieurs conditions de fonctionnement associées à l'aéronef, l'aéronef ayant un fuselage s'étendant entre une extrémité avant et une extrémité arrière, l'aéronef comportant en outre un réseau de soufflantes comportant des soufflantes montées sur et agencées circonférentiellement autour de l'extrémité arrière du fuselage, les soufflantes étant positionnées de manière à ingérer l'écoulement d'air de la couche limite s'écoulant le long du fuselage, au moins deux soufflantes parmi les soufflantes étant de tailles différentes ;
la détermination, par le ou les processeurs, d'une exigence d'aspiration par ingestion de la couche limite, telle qu'une valeur correspondant à la poussée nécessaire à la soufflante pour réduire de manière optimale la traînée sur l'aéronef 100 le long du fuselage,
pour chacune des soufflantes sur la base, au moins en partie, des données, et la commande indépendante des soufflantes à des poussées respectives sur la base, au moins en partie, de leurs exigences respectives en matière d'aspiration par ingestion de la couche limite.
